# EUROPÄISCHE PATENTSCHRIFT

(11) **EP 0 934 144 B1**
(45) Veröffentlichungstag und Bekanntmachung des Hinweises auf die Patenterteilung: **07.04.2004**
(21) Anmeldenummer: 97948759.2
(22) Anmeldetag: 14.10.1997
(51) Int. Cl.: B29B 17/00

(54) **AUFBEREITUNGSVORRICHTUNG ZUM ZERKLEINERN, FÖRDERN UND PLASTIFIZIEREN VON THERMOPLASTISCHEM KUNSTSTOFFMATERIAL**
PROCESSING DEVICE FOR CRUSHING, CONVEYING AND PLASTIFYING THERMOPLASTIC SYNTHETIC MATERIAL
DISPOSITIF DE TRANSFORMATION POUR BROYER, TRANSPORTER ET PLASTIFIER UNE MATIERE THERMOPLASTIQUE

(30) Priorität: 14.10.1996 AT 180196
(43) Veröffentlichungstag der Anmeldung: 11.08.1999
(73) Patentinhaber: Barth, Gerold, 4073 Wilhering (AT); Dobersberger, Manfred, 4061 Pasching (AT); Fellinger, Markus, 4061 Pasching (AT); Kroiss, Günter, 4061 Pasching (AT)
(72) Erfinder: Barth, Gerold, 4073 Wilhering (AT); Dobersberger, Manfred, 4061 Pasching (AT); Fellinger, Markus, 4061 Pasching (AT); Kroiss, Günter, 4061 Pasching (AT)
(86) Internationale Anmeldenummer: PCT/EP1997/005649
(87) Internationale Veröffentlichungsnummer: WO 1998/016360

(56) Entgegenhaltungen:
- EP-A- 0 514 327
- WO-A-89/07042
- WO-A-93/25312
- DE-A- 2 332 060
- DE-A- 2 842 162
- DE-A- 3 020 908
- US-A- 5 289 978
- US-A- 5 425 507
- US-A- 5 462 238

## Beschreibung

Die Erfindung bezieht sich auf eine Aufbereitungsvorrichtung zum Zerkleinern, Fördern und Plastifizieren von thermoplastischem Kunststoffmaterial, bestehend aus einer Beschikkungs- und einer Zerkleinerungseinrichtung und einem Schneckenextruder.

Es ist bekannt, Kunststoffgut in einer Mühle zu zerkleinern und in einen Silo zu fördern, aus dem das vorzerkleinerte Kunststoffgut über ein Stopfwerk einem Extruder zugeführt wird, wobei es sich meistens um einen Schneckenextruder handelt. Diese Konfiguration hat den Vorteil, daß der Silo eine Speicherkapazität bietet mit der Schwankungen im Materialaufkommen ausgeglichen werden können.

Nachteilig hingegen ist dabei der schlechte thermische Wirkungsgrad der Anordnung, da die Zerkleinerungsenergie, die in der Mühle in der Form von Reibungswärme auf das Kunststoffmaterial übergeht, durch die weitere Zwischenlagerung im Speichersilo wieder an die Umgebung abgegeben wird und somit für den Extrusionsprozeß verloren ist. Darüber hinaus hat diese Anordnung den Nachteil, daß sie einen erheblichen Platzbedarf hat und sehr aufwendig im Aufbau ist.

Aus der WO-A-8 907 042 ist eine Vorrichtung bekannt geworden, bei der das aufzubereitende Material von oben in einen Behälter fällt, auf dessen Boden eine Messerscheibe rotiert, die das Material vorzerkleinert und in eine in der Behälterwand angebrachte Öffnung drückt, wo ein Schneckenextruder das Material übernimmt.
Eine solche Anordnung hat den Vorteil, daß die Zerkleinerungsenergie, die in das zu verarbeitende Material in Form von Reibungswärme übergeht im Extrusionsprozeß genutzt werden kann. Es bestehen jedoch sehr erhebliche Nachteile, weil diese Anordnung nur mit Materialteilen begrenzter Größe beschickt werden kann und diese Beschickung stets gleichmäßig erfolgen muß, da es ansonsten schnell zu einer Überbelastung des Antriebsmotors oder zum Aufschmelzen des Kunststoffmaterials noch im Behälter kommen kann, das dann zur Verstopfung oder zum Festsetzen der Messerscheibe führt. Bei dieser Vorrichtung muß daher das zu verarbeitende Material immer in kleinen Stücken, gleichmäßig in den Aufgabebehälter gefördert werden.

Die dadurch notwendige Trennung des zerkleinerten Materials nach Stückgröße erweist sich in den meisten Fällen jedoch als aufwendig und kompliziert, besonders bei gepreßtem Kunststoffmaterial oder bei großen soliden Teilen, die entweder manuell oder automatisch separiert werden müssen, was einen erheblichen Aufwand an Arbeitskraft oder einen zusätzlichen bedeutenden Investitionsaufwand in Form einer Grobzerkleinerungsmaschine erfordert.

Weiters ist eine Vorrichtung zum Aufbereiten von thermoplastischem Kunststoffmaterial und Füllmaterial, wie z.B. Sägespänen, bekannt. Dabei soll hauptsächlich feuchtes Material vorgetrocknet und dann in einen Extruder gefördert werden. Nachteilig ist dabei, daß die Materialgröße, die für die Beschickung geeignet ist, begrenzt ist, da auch hier das Material mittels Schwerkraft in den Beschickungstrichter fällt und es bei zu großen Materialstücken zu den bereits genannten Problemen in Bezug auf Überlastung des Motors kommen kann.

Die US-A-5,462,238 beschreibt eine Zerkleinerungsvorrichtung mit einer Schneidtrommel, deren Messer gegen ein feststehendes Gegenmesser schneiden und der zwei angetriebene Zuführungswalzen in einem Zuführungstrichter vorgeordnet sind, die eine vergleichmäßigte, erzwungene Zuführung von Isolationsmaterial zur Schneidtrommel bewirken. Das Zerkleinerungsgut tritt, durch eine an die Messer der Schneidtrommel anschließende Förderschnecke transportiert, axial aus dem Gehäuserohr der Schneidtrommel frei aus.

Die WO-A-9325312 betrifft eine Vorrichtung zum Zerkleinern und Plastifizieren von thermoplastischem Kunststoff mit zwei ineinandergreifenden mit Messern bestückten Schneidwalzen, die das Gut einziehen, zerkleinern und nach unten in eine gleichgerichtet angeordnete Extruderschnecke stopfen.

Die Erfindung hat sich zur Aufgabe gemacht, die Nachteile der vorhandenen Aufbereitungsvorrichtungen der eingangs genannten Art zu beseitigen, damit der Prozeßablauf bei der Aufbereitung unabhängig von der Größe und der Form des Materials, sowie von der Menge die sich im Trichter befindet, vergleichmäßigt wird und ohne Störungen vor sich geht und um die Vorteile der Nutzbarmachung der Zerkleinerungsenergie im Extrusionsprozeß zu erhalten und überdies eine einfach aufgebaute, wenig störungsanfällige, unterschiedliche Beschickungsmengen ausgleichende, Aufbereitungsvorrichtung zu schaffen.

Diese Aufgabe wird bei einer Aufbereitungsvorrichtung gemäß dem Oberbegriff des Anspruches 1 mit den Merkmalen des kennzeichnenden Teiles des Anspruches 1 gelöst.
Die Unteransprüche betreffen besonders vorteilhafte Ausgestaltungen der Erfindung und bilden zusammen mit dem Anspruch 1 gleichzeitig einen Teil der Beschreibung der Erfindung.

Durch die Anordnung von Austragorganen im Endbereich der Aufbereitertrommel, die zumindest die Austrittsöffnung des Förderrohrs überstreichen, und besonders vorteilhaft aus einer Förderschnecke gebildet sind oder sogar aus den dort angebrachten umlaufenden Messer bestehen können, wird eine Vergleichmäßigung des Materialflusses erreicht, die besonders durch die speichernde Wirkung der Austragsorgane entsteht und mit zunehmender Länge des austragorgantragenden Teiles der Aufbereitertrommel zunimmt.
Dabei ist eine sehr enge, nahezu berührende Anordnung der Bahnen der Austragsorgane und der Extruderschnecke zueinander an der Austrittsöffnung der Aufbereitertrommel wichtig, um ungleichmäßige Zufuhr, Brückenbildung und Verstopfungen zu vermeiden, weil dadurch erst eine Anordnung der genannten Teile der Vorrichtung herstellbar ist, mit der die Übergabe des Zerkleinerungsgutes störungsfrei erfolgen kann.
Die Zufuhrbedingungen an der Zuführungsöffnung und die Übergangsbedingungen an der Austrittsöffnung und die Regelung der Beschickung nach dem Füllungsgrad der Förderschnecke beinflussen und ergänzen einander und dafür ist die Anbringung einer bewegten Aufgabevorrichtung, die gleichfalls der Regelung unterliegt, Voraussetzung.

Mit einem einzigen bewegten Arbeitsorgan, vor der von oben über etwa ein Viertel des Umfanges des Förderrohres herablaufenden und über die Länge des messertragenden Teiles der Aufbereitertrommel reichenden Zuführungsöffnung, wird die ständige Zuführung von Kunststoffmaterial unterschiedlicher und stark wechselnder Beschaffenheit sichergestellt.

Die Zuführung von Kunststoffmaterial unterschiedlicher und stark wechselnder Beschaffenheit wird durch die Anwendung einer schräg zur Zuführungsöffnung fallend geneigten Bodenplatte des Zuführungsschachtes für ein einziges bewegbares Arbeitsorgan dadurch verbessert, daß diese ebenso wie das Arbeitsorgan bis an die in Umlaufrichtung nachgeordnete Öffnungskante und über die gesamte Länge des messertragenden Teiles der Aufbereitertrommel reicht.

Die Anbringung einer Zuführungsöffnung über die gesamte axiale Länge des messertragenden Teiles der Aufbereitertrommel, sowie die Anbringung einer Übergabevorrichtung in Form eines angetriebenen Schiebers über diese gesamte Länge der Zuführungsöffnung ist die Zuführung des Kunststoffmaterials sehr verbessert, wobei die Bewegungsrichtung des Schiebers in die Zuführungsöffnung hinein und im rechten Winkel zu der axialen Richtung der Aufbereitertrommel gerichtet, die Leistungsfähigkeit und die Zuverlässigkeit der Beschickung sehr begünstigt.

Zur Erhöhung der Durchsatzleistung ist die Anwendung einer regelbaren Preßkraft des Schiebers von Vorteil. Dabei ist es günstig, die Regelung der Preßkraft über die Leistung der Antriebselemente vorzunehmen und zusätzlich eine Regelung der Drehzahl der Aufbereitertrommel auf gleiche Weise durchzuführen oder zusätzlich noch eine Regelung nach der an der Austrittsöffnung des Förderrohrs auftretenden Temperatur des Kunststoffmaterials vorzunehmen.

Die Zahl der Messer auf der Aufbereitertrommel und der mit dieser zusammenhängenden ortsfesten Gegenmesser kann nach dem erforderlichen Durchsatz gewählt werden, wobei die Anordnung der rotierenden Messer entlang einer Schraubenlinie gleichzeitig eine Förderwirkung in axialer Richtung hervorruft, die durch die Anbringung von ebenso schraubenförmig verlaufenden Leitblechen verbessert werden kann.
Dabei ist die Anordnung des einen oder mehrerer Gegenmesser und der rotierenden Messer mit ihren Schneidkanten zum Schnittbeginn in einer Ebene ausgerichtet zu wählen, damit der Schnitt gleichzeitig über die gesamte Schneidkantenlänge beginnt, wodurch Einziehen von Kunststoffmaterial und dadurch in der Folge Verstopfungen vermieden werden können, sehr vorteilhaft.
Messer und Leitbleche können für höhere Durchsatzleistungen auch mehrgängig angeordnet sein.

Bei rechtwinkeliger Ausrichtung von Aufbereitertrommel und Extruderschnecke ergibt sich ein einfacher und stabiler Aufbau bei dem sehr geringe Abstände zwischen den austragsorgantragenden Teilen und der Extruderschnecke, während bei Längsausrichtung der Durchmesser der austragsorgantragenden Teile größer gewählt werden muß als der Durchmesser des messertragenden Teiles der Aufberreitertrommel.

Für die zuverlässige Übergabe des Kunststoffmaterials vom Förderrohr an das Schneckenrohr des Extruders ist neben der engen Anordnung der Austragorgane bzw. Förderschneckenflügel und der Extruderschnecke zueinander ein, in Bezug auf die Förderung des Kunststoffmaterials, gleichgerichteter Drehsinn dieser Organe von Bedeutung.

Mit der Anbringung von umlaufenden Messern, wobei zwei Reihen mit je zwei einander auf der Aufbereitertrommel gegenüberliegenden Messern in jeder Reihe, die oberhalb der Austrittsöffnung des Förderrohrs liegen gewöhnlich das Auslangen gefunden werden kann, die mit feststehenden Messern zusammen das Gut zerkleinern, werden auch noch größere Kunststoffteile erfaßt und so lange und wirksam durch das kämmende zusammenlaufen mit den feststehenden Messern zerkleinert, bis sie von der Extruderschnecke erfaßt und eingezogen werden. Dabei werden besonders hohe Spitzen des Drehmomentes an der Aufbereitertrommel vermieden, wenn die Messer auf deren Mantel in Umlaufrichtung zueinander versetzt angeordnet sind.
Die gleiche Richtung der Umlaufrichtung der Messer und der Extruderschnecke verbessert dabei die Beschickung des Extruders.

Die Auslegung von Länge und Gestaltung der Austragorgane und ihre Anordnung in Bezug auf die Austrittsöffnung ist für die Fähigkeit der Vorrichtung Durchsatzveränderungen aufzufangen und den gewünschten Zerkleinerungsgrad des Kunststoffmaterials beibehalten zu können von Bedeutung.

Der austragsorgantragende Teil der Aufbereitertrommel trägt eine Förderschnecke, die für die ausgleichende Förderung durch das Fördervolumen besonders geeignet ist, wobei für die häufigsten Anwendungsfälle eine eingängigen Ausführung genügt.

Für die Verbesserung der Einspeisung des Kunststoffmaterials in die Austrittsöffnung des Förderrohres und zur Verringerung des Druckes auf die Endplatte des Förderrohrs und dessen Lagerung ist die Anwendung von entgegengesetzt zu den Austragorganen und besonders einer Förderschnecke fördernden Schneckenflügeln von großem Vorteil.

Für die Verbesserung der Übergabe an die Extruderschnecke ist die Anordnung von Messer, zwei oder vier radial über den Umfang verteilt sind oder mehrere Radialreihen, günstigerweise zwei, nebeneinander und in Umfangrichtung versetzt die Übergabe bei schwierigem Material durch Nachzerkleinerung sehr verstärken und erforderlichenfalls mit festen Messern kämmend zerkleinern.

Für die Wartung der ortsfesten Messer ist die Anbringung mit Messerhaltern an einem in das Förderrohr einsetzbaren Aufnahmeteil von Vorteil.

Für die günstige Abstimmung der Stopfwirkung der umlaufenden Messer ist die Ausrichtung ihrer Vorderkanten in Bezug auf eine Axialebene der Aufbereitertrommel von Bedeutung, wobei durch voreilende Anordnung auf dieser die Stopfwirkung erhöht wird. Die Übergabe des Gutes wird durch einen geringen Abstand zwischen den Messern und der Extruderschnecke verbessert.

Für die Wartung der umlaufenden Messer und für deren Wechsel ist die Anbringung mit Messerhaltern auf einer Schneidhülse, die auf die Aufbereitertrommel, an deren messertragenden Teil anschließend, aufgeschoben ist.

Die Anordnung eines Druckringes als Abschluß der Aufbereitertrommel zur Stirnseite des Lagergehäuses hin, verhindert den Druckaufbau zwischen Aufbereitertrommel bzw. deren Welle und dem Lagergehäuse und damit das Auftreten von Axialkräften und eine Vergrößerung der Lagerbeanspruchung. Aus diesem Grund ist auch ein möglichst enger Spalt in Radialrichtung zwischen dem Druckring und der Innenwand des Förderrohres vorteilhaft, damit verhindert wird, daß gröberes Material in den Bereich der Feinabdichtung der Lagerung gelangt und Schäden verursacht.

Bei Verarbeitung von kleinteiligem Kunststoffmaterial ist die Anwendung von Messern auf der Aufbereitertrommel nicht erforderlich, es reicht ein messertragender Teil der Aufbereitertrommel mit Anordnung von einer oder zwei Reihen oberhalb der Austrittsöffnung in den Extruder. Die Zuführung des Materials kann über die gesamte Länge der Aufbereitertrommel erfolgen und eine schachtförmige Aufgabevorrichtung vorgesehen sein die oben mit einer Beschickungseinrichtung ausgerüstet ist, weil bei diesem Gut keine abgesetzte, dosierte Zuteilung erforderlich ist, während die Zerkleinerungsarbeit weitgehend entfallen kann.

Weil kleinteiliges Gut zumeist eine Waschanlage durchlaufen hat, ist es notwendig die anhaftende Feuchtigkeit zu entfernen. Dies kann sehr wirksam mit einem Trocknungsluftstrom geschehen der, im Gegenstrom zum Materialfluß, von unten nach oben strömt und in einer Aufbereitungsanlage gereingt und getrocknet und zur Verbesserung der Feuchtigkeitsaufnahme erwärmt wieder zugeführt wird.

Bei einer für die Bearbeitung von kleinteiligem Kunststoffmaterial besonders leistungsfähigen Anordnung ist die Förderschnecke der Aufbereitertrommel in beiderseits der Austrittsöffnung angeordnete links- und rechtsgängige Förderschnecken aufgeteilt, zwischen denen Stopf- und/oder Schneidwerkzeuge oberhalb der Austrittsöffnung laufen können und die das von beiden Seiten herbeigeschaffte Gut besonders wirksam der Extruderschnecke zuführen.

Eine große Öffnungsweite der Zuführungsöffnung im Förderrohr, von der Aufgabevorrichtung her, ermöglicht ebenfalls eine Erhöhung der Zuteilmengen und damit der Durchsatzleistung.

Die Erfindung wird an Hand der Zeichnung beschrieben.
Es zeigt:

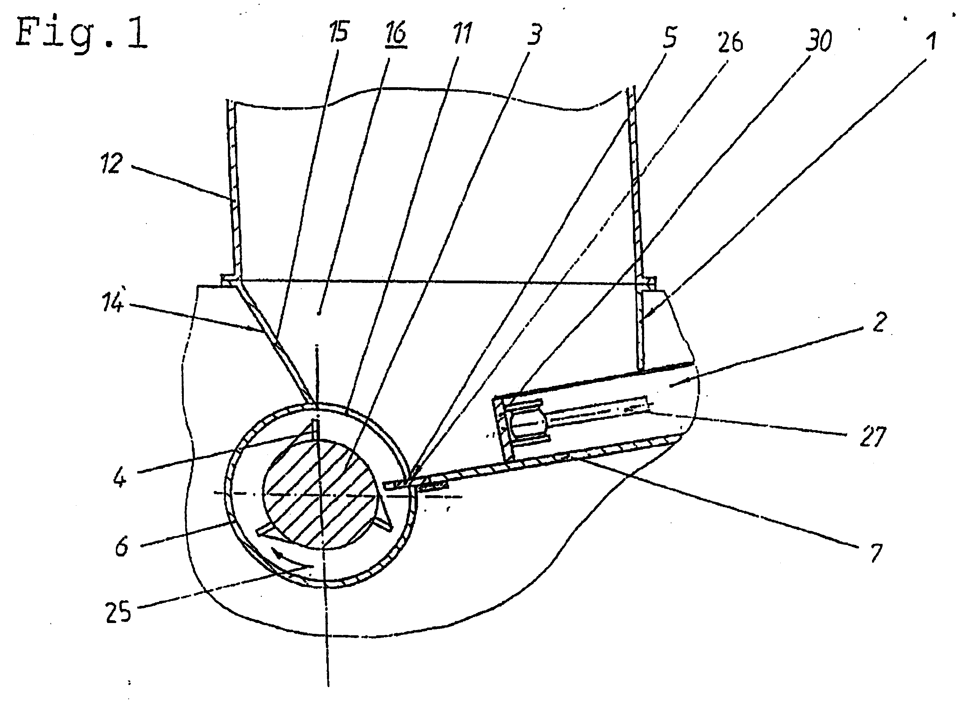

- Fig. 1: einen Teilschnitt durch eine Aufbereitungsvorrichtung und mit der Aufbereitertrommel im Radialschnitt;

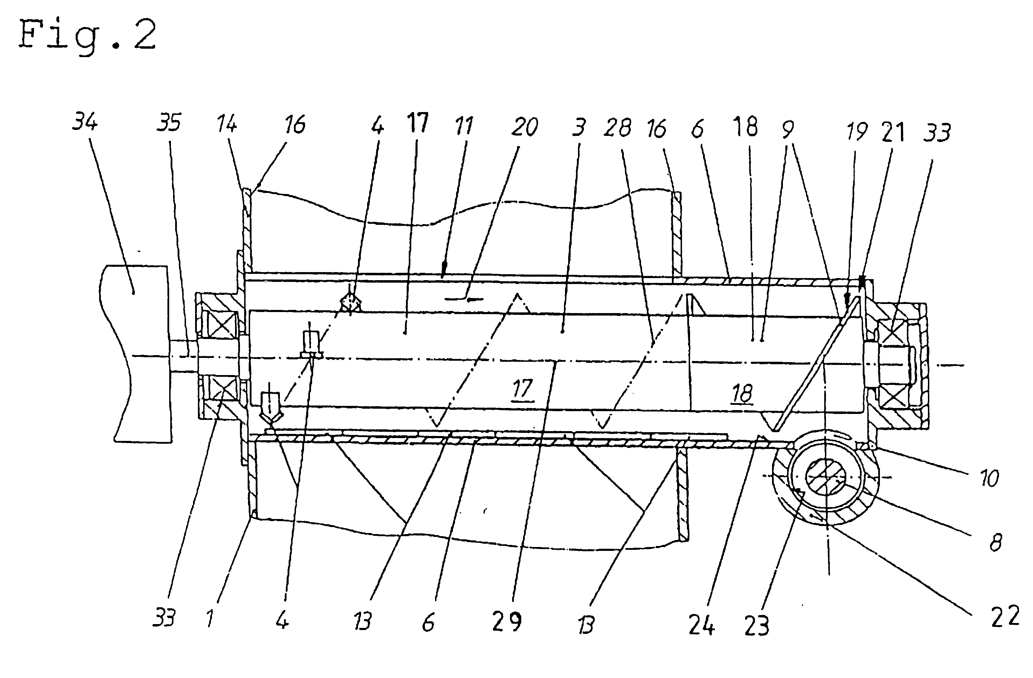

- Fig. 2: einen Teilausschnitt der Aufbereitungsvorrichtung in Seitenansicht, im Längsschnitt durch die Aufbereitertrommel:

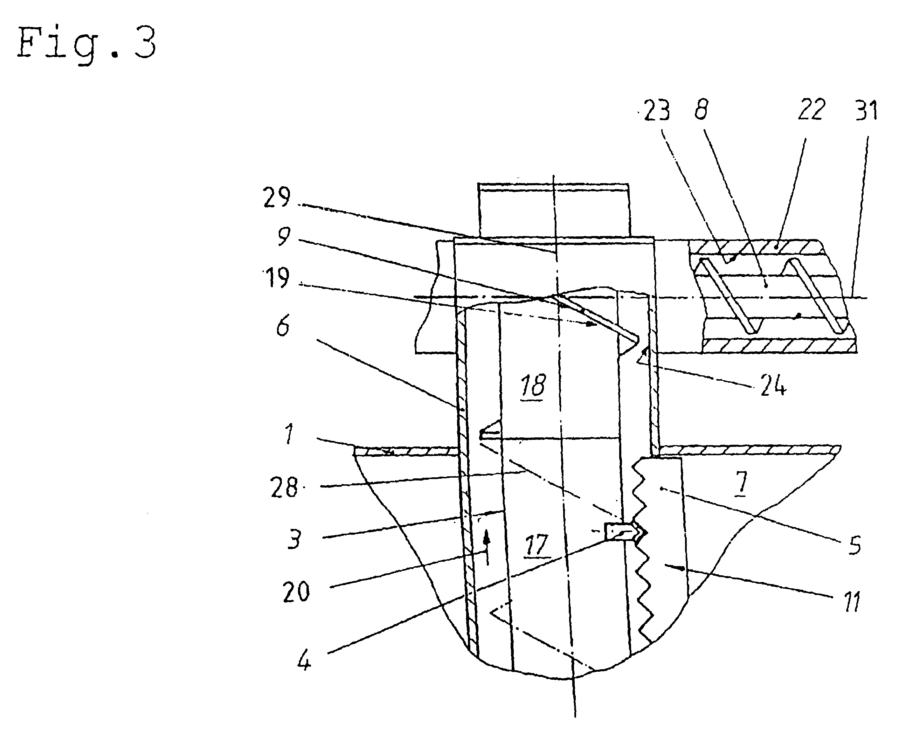

- Fig. 3: einen Teilschnitt in Draufsicht auf die Aufbereitungsvorrichtung nach Fig. 1 und 2;
- Fig. 4: einen abgesetzten Längsschnitt, nach I-II durch die Längsachse des Extruderrohres und Querschnitt durch das Ende der Aufbereitertrommel, wie in Fig. 5 verlaufend;
- Fig.5: einen Längsschnitt durch den Endbereich der Aufbereitertrommel und einen Querschnitt durch das Extruderrohr;
- Fig. 6: einen Vertikalschnitt durch Zuführungsvorrichtung Gehäuse der Aufbereitertrommel und das Extruderrohr im Querschnitt.

Die Vorrichtung besteht aus einem Maschinengehäuse 1 mit einem aufgesetzten Zuführungstrichter 12, dessen unterer anschließender Zuührungsschacht 14 mit einer Bodenplatte 7 abschließt, die schräg nach unten geneigt verläuft und an der Zuführungsöffnung 11 eines waagrecht ausgerichteten Förderrohrs 6 der Zerkleinerungsvorrichtung endet.

Im Förderrohr 6 ist eine Aufbereitertrommel 3 in waagrechter Lage angeordnet, drehbar eingesetzt, die beiderseits an Lagerungen 33 gelagert und über die Antriebswelle 35 von einem Motor 34 antreibbar ist.

Die Aufbereitertrommel 3 besteht aus einem messertragenden Teil 17, an dem Messer 4 radial abstehend entlang einer Umfangsschraubenlinie 28 befestigt sind und aus einem daran anschließenden austragorgantragenden Teil 18, dessen Austragorgane 19 von einer Förderschnecke 9 gebildet sind.
Die Zuführungsöffnung 11 des Förderrohrs 6 reicht in axialer Richtung 20 über den gesamten messertragenden Teil 17 der Aufbereitertrommel 3 und ist von der Vorderwand 15 und den beiden Seitenwänden 16 des Zuführungstrichters 12 umgeben, die mit der Bodenplatte 7 den Zuführungsschacht 14 bilden.

Die Bodenplatte 7 reicht bis an die, in Umlaufrichtung 25 der Aufbereitertrommel 3 nachgeordnete, Öffnungskante 26, an der mit dieser eben abschließend ein über die Zuführungsöffnung 11 durchgehendes, ortsfest angebrachtes Gegenmesser 5 befestigt ist, das in das Förderrohr 6 hineinragend mit den Messern 4 der Aufbereitertrommel 3 kämmend schneidend, wobei bei beginnendem Schnitt die Schneidkanten der Messer 4 und des Gegenmessers 5 in einer Ebene liegen.

Auf der Bodenplatte 7 ist ein über die gesamte Länge der Zuführungsöffnung 11 sich erstreckender Schieber 30, als Aufgabevorrichtung 2 mit einem hydraulischen Kraftzylinder 27, gegen die Aufbereitertrommel 3 bis zur Zuführungsöffnung 11 bewegbar geführt, gelagert.

Im Endbereich 21 der Aufbereitertrommel 3 liegt am Umfang des Förderrohrs 6, nach unten gerichtet, eine Austrittsöffnung 10, die gleichzeitig die Einfälloffnung in das Schneckenrohr 22 der Extraderschnecke 8 bildet, durch die das zerkleinerte Kunststoffmaterial von der Förderschnecke 9 gefordert wird.

Die Bahnen der Extruderschnecke 8 und der Förderschnecke 9 sind dabei so angeordnet, daß sie einander gerade nicht berühren, wodurch eine einwandfreie Übergabe des Materials sichergestellt ist. Die Innenwände 23 und 24 des Schneckenrohres 22 des Extruders und der Aufbereitertrommel 3 schließen unmittelbar aneinander an, wobei sich die beiden zylindrischen Rohre durchdringen.
Der Umlaufsinn der Förderschnecke 9 und der Extruderschnecke 8 ist an der Austrittsöffnung 10 des Förderrohrs 6 in Bezug auf die Förderrichtung gleichgerichtet. Das Schneckenrohr 22 der Extruderschnecke 8 ist mit seiner Längsachse 31 im rechten Winkel zur Längsachse 29 der Aufbereitertrommel 3 ausgerichtet.

Das sich auf der Bodenplatte 7 des Zuführungsschachtes 14 befindende und zu verarbeitende Kunststoffmaterial wird mit dem angetriebenen Schieber 30 gegen die Aufbereitertrommel 3 gedrückt, die orthogonal zur Bewegungsrichtung des Schiebers 30 steht.

Mit Hilfe der auf dar Aufbereitertrommel 3 entlang einer Umfangsschraubenlinie 28 über die Aufbereitertrommel 3 verteilt angeordneten Messer 4 und der nachfolgenden Förderschnecke 9 wird das Kunststoffmaterial zuerst zerkleinert und dann in axialer Richtung 20 durch das Förderrohr 6 in Richtung auf die Austrittsöffnung 10 im Mantel des Förderrohrs 6 transportiert und an den Schneckenextruder abgegeben.

An der Innenwand 24 des Förderrohrs 6 sind, im gleichen Wendelsinn wie die rotierenden Messer 4, Leitbleche 13 schraubenförmig angeordnet, die als Gegenhalter einer verbesserten Führung des zerkleinerten Kunststoffmaterials bei der Förderung durch das Förderrohr 6 dienen.
Durch die Anordnung des crtsfesten Gegenmessers 5 in der Weise, daß bei Beginn des Schnittvorganges aie gerade eingreifenden Schneidkanten der bewegten Messer 4 und des ortsfesten Segenmessers 5 sich in einer Ebene befinden, die parallel zur Bodenplatte 7 steht, wird das Spiel zwischen den Schneidkanten zu Beginn des Schnittvorganges im wesentlichen beseitigt, wodurch ein gleichzeitiger Schnitt erfolgen kann.

Damit ein optimaler Prozeßablauf erreicht werden kann, besteht einerseits die Möglichkeit die Anpreßkraft des angetriebenen Schiebers 30 gegen das Kunststoffmaterial in Abhängigkeit von der Leistungsaufnahme oder der Stromaufnahme des Motors der Extruderschnecke 8 bzw. des Motors 34 der Aufbereitertrommel 3 zu steuern und andererseits die Drehzahl der Aufbereitertrommel 3 in Abhängigkeit von der Temperatur des Kunststoffmaterials an der Austrittsöffnung 10 des Förderrohrs 6 bzw. in Abhängigkeit von der Leistungs- oder Stromaufnahme des Motors der Extruderschnecke 8 zu regeln, damit der Massendurchsatz an zerkleinertem Kunststoffmaterial im Förderrohr 6 konstant bleibt und es zu keiner Materialanhäufung im Bereich der Austrittsöffnung 10 oder beim Eingang zur Extruderschnecke 8 im Schneckenrohr 22 und damit zu einem Temperaturanstieg über die Schmelztemperatur des Kunststoffmaterials kommen kann.

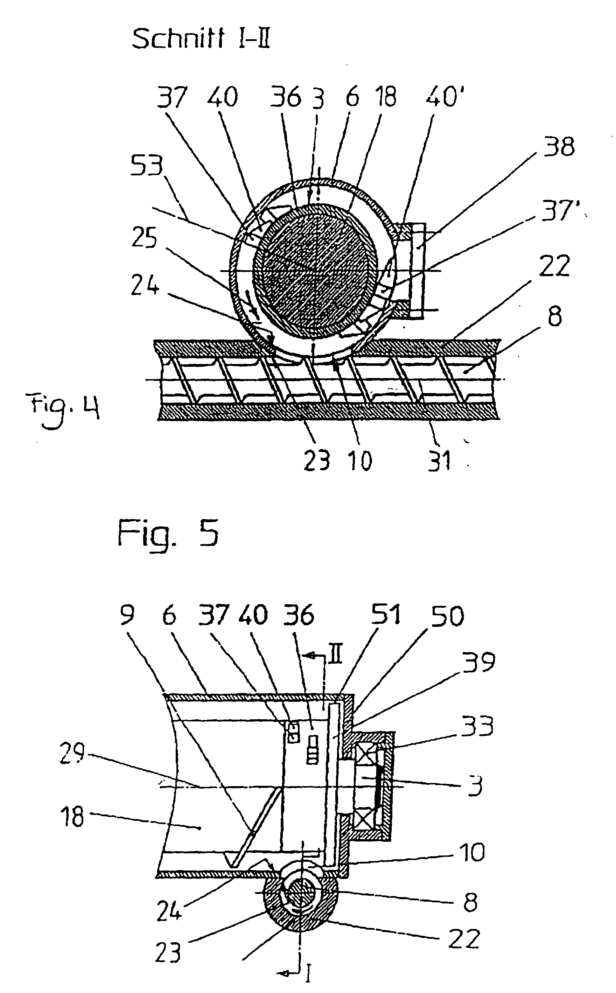

Bei der in Fig. 4 und Fig. 5 wiedergegebenen Ausführungsform der Erfindung ist im Endbereich der Aufberteitertrommel 3, anschließend an die Förderschnecke 9 eine Schneidhülse 36 aufgeschoben ist, die an Messerhaltern 40, die umlaufenden Messer 37 trägt und die gegen das Lagergehäuse 50 mit einem Druckring 39 abschließt, der einen größeren Durchmesser als die Aufbereitertrommel 3 aufweist und bis nahe an die Innenwand 24 des Förderrohres 6 reicht und dort einen engen Spalt 51 von 0,2 bis 0,4 mm bildet und in geringem Abstand vor der Stirnseite des abnehmbaren Lagergehauses 50 angeordnet ist.

Auf der Schneidhülse 36 sind Lagerhalter 40 in zwei beabstandeten benachbarten Radialreihen angeordnet, in denen die umlaufenden Messer 37 befestigt sind und die in jeder Radialreihe um 180 Winkelgrade versetzt auf dem Mantel der Schneidhülse 36 befestigt sind. Die benachbarten Messer 37 der beiden Radialreihen sind zueinander versetzt angebracht, um Kraftspitzen beim Schneiden zu verringern.

Die umlaufenden Messer 37 sind dabei mit den in Umlaufrichtung 25 vorne liegenden Kanten in Axialebenen 53 der Aufbereitertrommel 3 liegend angeordnet.

Die umlaufenden Messer 37 schneiden das Aufbereitungsgut gegen ortsfest angebrachte Messer 37', die an Messerhaltern 40' angebracht, in einer Reihe parallel zur Achse der Aufbereitertrommel 3 ausgerichtet sind, die auf einem Aufnahmeteil 38 befestigt sind, der durch eine seitlich am Förderrohr 6 angebrachte Zugangsöffnung eingesetzt und verschraubt ist. Die umlaufenden Messer 37 kämmen dabei mit den ortsfesten Messer 37' in Umlaufrichtung 25 von unten nach oben und schneiden dabei mit den Seitenkanten.

Die Austrittsöffnung 10 der Förderrohres 6 bildet die Einfüllöffnung im Schneckenrohr 22 der Extruderschnecke 8 und die umlaufenden Messer 37 und der Umfang der Extruderschnecke 8 sind einander nahezu berührend genähert.

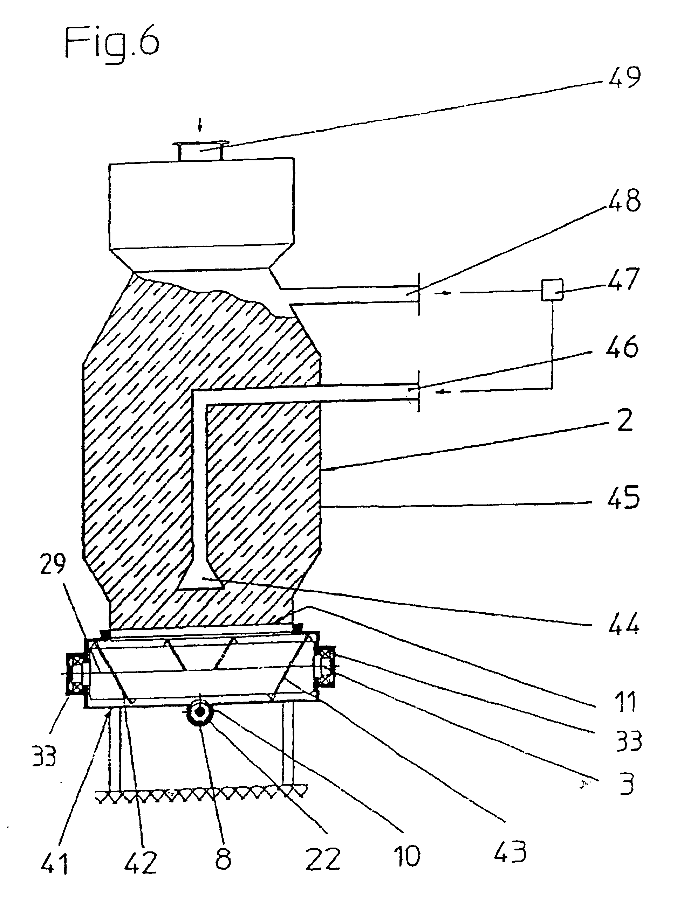

In Fig. 6 ist eine Ausführungsform der Erfindung dargestellt, bei der das Forderrohr 6 der Aufbereitertrommel 3 eine mittige Austrittsöffnung 10 nach unten aufweist, die gleichzeitig die Einfullöffnung der Schneckenrohres 22 der Extruderschnecke 8 bildet.

Das Förderrohr bildet ein Gehäuse 41 für eine aufbereitertrommel 3, die mit einer linksgängigen Förderschnecke 42 und mit einer rechtsgängigen Förderschnecke 43 versehen ist, die beiderseits der mittigen Austrittsöffnung 10 angeordnet sind und vor dieser, einen mittleren Bereich auf der Aufbereitertrommel 3 frei lassen, in dem in radialer Richtung über den Umfang verteilt Stopfwerkzeuge oder Messer 37 angebracht sind.

Nach oben reicht eine Zuführungsöffnung 11 über die Länge des Gehäuses 41, die von einem, die Aufgabevorrichtung 2 bildenden Trocknungsbehälter 45 überdeckt wird, der mit einer oben liegenden Beschickungsainrichtung 49 ausgestattet ist und eine seitliche Einspeisung 46 und einen oberen Ausgang 48 für das Trocknungsgas aufweist, die mit einer Aufbereitungsanlage 47 das Trocknungsgas verbunden sind.

Im Trocknungsbehälter 45 ist im Bereich oberhalb der Zuführungsöffnung 11 eine Einblasdüse 44 für trockene, erwärmte Luft angeordnet, die über eine Zuleitung mit einer außerhalb liegenden Anspeisung verbunden ist.

Die Luft, welche mit der Gutfeuchtigkeit beladen ist, wird im oberen Teil des Trocknsngsbehälters 45 über eine Ableitung einem Ausgang 48 zugeführt.

Die Anspeisung 46 und der Ausgang 48 sind mit Leitungen an eine Aufbereitungsanlage für die Luft angeschlossen, in der die Reinigung, Trocknung und Erwärmung stattfindet.

### Bezugszeichenverzeichnis

- 1: Maschinengehäuse
- 2: Aufgabevorrichtung
- 3: Aufbereitertrommel
- 4: Messer der Aufbereitertrommel 3
- 5: ortsfestes Gegenmesser
- 6: Förderrohr
- 7: Bodenplatte
- 8: Extruderschnecke
- 9: Förderschnecke
- 10: Austrittsöffnung des Förderrohrs 6
- 11: Zuführungsöffnung des Förderrohrs 6
- 12: Zuführungstrichter
- 13: schraubenförmig angeordnetes Leitblech
- 14: Zuführungsschacht des Zuführungstrichters 12
- 15: Vorderwand des Zuführungstrichters 12
- 16: Seitenwand des Zuführungstrichters 12
- 17: messertragender Teil der Aufbereitertrommel 3
- 18: austragorgantragender Teil der Aufbereitertrommel 3
- 19: Austragorgan an der Aufbereitertrommel 3
- 20: axiale Richtung des Förderrohrs 6 und der Aufbereitertrommel 3
- 21: Endbereich der Förderschnecke 19
- 22: Schneckenrohr der Extruderschnecke 8
- 23: Innenwand des Schneckenrohrs 22
- 24: Innenwand des Förderrohrs 6
- 25: Umlaufrichtung der Aufbereitertrommel 3
- 26: Öffnungskante der Zuführungsoffnung 11
- 27: hydraulischer Kraftzylinder des Schiabers 30
- 28: Umfangsschraubenlinie der Messer 4
- 29: Längsachse der Aufbereitertrommel 3
- 30: Schieber der Aufgabevorrichtung 2
- 31: Längsachse des Schneckenrohrs 22 der Extrudarschnecke 8
- 32 33: Lagerung der Aufbereitertrommel 3
- 34: Motor der Aufbereitertrommel 3
- 35: Antriebswelle der Aufbereitertrommel 3
- 36: Schneidhülse
- 37: umlaufende Messer des austragsorgantragenden Teils 18 der Aufbereitertrommel 3
- 37': ortsfeste Messer des Förderrohres 6
- 38: Aufnahmeteil für die Messerhalter 40'
- 39: Druckring
- 40: Messerhalter für ein umlaufendes Messer 37
- 40': Messerhalter des Aufnahmeteiles 38
- 41: Gehäuse als Förderrohr
- 42: linksgängiger Förderschneckenteil
- 43: rechtsgängiger Förderschnackenteil
- 44: Einblasdüse für das trockene Trocknungsgas, wie Luft
- 45: Trocknungsbehälter als Aufgabevorrichtung 2
- 46: Einspeisung für das trockene Trocknungsgas
- 47: Aufbereitungsanlage für das Trocknungsgas
- 48: Ausgang des mit Gutfeuchtigkeit beladenen Trocknungsgases
- 49: Beschickungseinrichtung für den Trocknungsbehalter 45
- 50: Lagergehäuse
- 51: Spalt zwischen Druckring und Innenwand des Förderrchres 6
- 52 53: Axialebene durch der Aufbereitertrommel 3

## Patentansprüche

1. Aufbereitungsvorrichtung für thermoplastisches Kunststoffmaterial, bestehend aus einer Zerkleinerungsvorrichtung zum Zerkleinern und Fördern und aus einer unmittelbar anschließenden Extrudiervorrichtung, zum Plastifizieren und insbesonders zum Granulieren, die waagrecht in einem Gehäuse antreibbar umlaufend angeordnet ist, das mit einer nach oben gerichteten Zuführungsöffnung (11) und mit einer nach unten gerichteten Austrittsöffnung (10) für das Kunststoffmaterial versehen ist, wobei der Zuführungsöffnung (11) ein Zuführungsschacht (14), diese allseitig umgebend, für das Kunststoffmaterial vorgeordnet ist und die Austrittsöffnung (10) und die Einfüllöffnung des Schneckenrohres (22) einer Extruderschnecke (8) einer Extrudiervorrichtung mit den Innenwänden (23, 24) unmittelbar aneinander anschließen, **dadurch gekennzeichnet, daß die** Zerkleinerungsvorrichtung aus einer einzigen, in einem Förderrohr (6) als Gehäuse, umlaufbaren Aufbereitertrommel (3) besteht, mit einem messertragenden Teil (17), auf dem Messer (4) verteilt und in axialer Richtung (20) zur Austrittsöffnung (10) hin fördernd angeordnet sind und in wenigstens ein ortsfestes Gegenmesser (5) an dem Förderrohr (6) eingreifbar sind und mit einem an den messertragenden Teil (17) anschließenden austragsorgantragenden Teil (18) der Aufbereitertrommel (3) anschließt, wobei in Endbereich (21) des austragorgantragenden Teiles (18) im Förderrohr (6) die nach unten gerichtete Austrittsöffnung (10) angebracht ist, wobei die Betriebsbahnen der Austragorgane (19) der Aufbereitertrommel (3) und die Extruderschnecke (8) in geringem Abstand voneinander, einander nahezu berührend verlaufend, bei unmittelbar aneinander anschließenden Innenwänden (23, 24) des Förderrohres (6) und des Schneckenrohres (22) angeordnet sind und daß der Aufbereitertrommel (3) eine bewegbare Aufgabevorrichtung (2) für das Kunststoffmaterial vorgeordnet ist, deren Arbeitsorgan in der Preßkraft über die Leistungsaufnahme der Antriebselemente der Extruderschnecke (8) und/oder der Aufbereitertrommel (3) und/oder über die Drehzahl der Aufbereitertrommel (3) regelbar ist und wobei an dem Zuführungsschacht (14) der Aufgabevorrichtung (2) die Zuführungsöffnung (11), in axialer Richtung (20) über den messertragenden Teil (17) der Aufbereitertrommel (3) reichend, eingearbeitet ist.

2. Aufbereitungsvorrichtung nach Anspruch 1, **dadurch gekennzeichnet, daß** die Aufgabevorrichtung (2) für das Kunststoffmaterial, mit dem Zuführungstrichter (12) der Zuführungsöffnung (11) vorgeordnet ist, die über etwa ein Viertel des Umfanges des Förderrohres (6), von oben bis zu dessen Mitte herabreichend und reichend eingearbeitet ist, in die mittels eines einzigen bewegbaren Arbeitsorganes der bewegbaren Aufgabevorrichtung (2) das Kunststoffmaterial zuführbar ist.

3. Aufbereitungsvorrichtung nach Anspruch 2, **dadurch gekennzeichnet, daß** der Zuführungsschacht (14) an der Zuführungsöffnung (11) des Förderrohrs (6) mit einer schräg zur Zuführungsöffnung (11) fallend geneigten, Bodenplatte (7) abschließt, die bis an die, in Umlaufrichtung (25) der Aufbereitertrommel (3) nachgeordnete Öffnungskante (26) und über die gesamte Länge der Zuführungsöffnung (11) reicht.

4. Aufbereitungsvorrichtung nach einem der vorhergehenden Ansprüche, **dadurch gekennzeichnet, daß** die Aufgabevorrichtung (2) von einem, bewegbaren Schieber (30) gebildet ist, der über die Breite der Bodenplatte (7) reicht und auf dieser im wesentlichen bis an die Zuführungsöffnung (11) der Aufbereitertrommel (3), im rechten Winkel zur axialen Richtung (20) des Förderrohres (6) von einem hydraulischen Kraftzylinder (27) verschiebbar ist.

5. Aufbereitungsvorrichtung nach einem der vorhergehenden Ansprüche, **dadurch gekennzeichnet, daß** der Schieber (30), der über einen hydraulischen Kraftzylinder (27), insbesonders mit einer elektrohydraulisch gesteuerte Druckanlage bewegbar ist, eine regelbare Preßkraft auf das aufzugebende Kunststoffmaterial ausüben kann, wobei die Preßkraft des Schiebers (30) in Abhängigkeit von der Leistungsaufnahme, insbesonders von der Stromaufnahme des Antriebsmotors der Extruderschnecke (8) und/oder des Antriebsmotors der Aufbereitertrommel (3) regelbar ist.

6. Aufbereitungsvorrichtung nach dem vorhergehenden Anspruch, **dadurch gekennzeichnet, daß** jeweils wenigstens ein, insbesonders mehrere und vorzugsweise drei bis vier Messer (4) entlang einer Radialreihe am Umfang der Aufbereitertrommel (3) auf dieser befestigt sind, wobei die Messer (4), vorzugsweise entlang einer Umfangsschraubenlinie (28) angeordnet sind und in Betrieb mit wenigstens einem ortsfesten Gegenmesser (5) das, insbesonders durchgehend, über die gesamte Länge der Zuführungsöffnung (11) in axialer Richtung (20) reicht, zusammenlaufen, wobei die Schneidenumrisse der bewegten Messer (4) mit den Schneidenumrissen des Gegenmessers (5) eng und ohne Berührung kämmen und bei beginnendem Schnitt die Schneidkanten der, über ihre gesamten Schneidenlängen schneidenden Messer (4,5) im wesentlichen in einer Ebene liegend angeordnet sind.

7. Aufbereitungsvorrichtung nach einem der vorhergehenden Ansprüche, **dadurch gekennzeichnet, daß** die Drehzahl der Aufbereitertrommel (3) in Abhängigkeit von der Temperatur des Kunststoffmaterials an der Austrittsöffnung (10) des Förderrohrs (6) regelbar ist.

8. Aufbereitungsvorrichtung nach einem der vorhergehenden Ansprüche, **dadurch gekennzeichnet, daß** die Aufbereitertrommel (3) mit ihrer axialen Längsrichtung (20) im rechten Winkel zu der Längsachse (31) der Extruderschnecke (8) und des Schneckenrohrs (22) ausgerichtet an diesem angebracht ist.

9. Aufbereitungsvorrichtung nach einem der vorhergehenden Ansprüche, **dadurch gekennzeichnet, daß** mehrere Leitbleche (13) an der Innenwand (24) des Förderrohrs (6) in Abständen voneinander angebracht sind, die bei Anordnung der Messer (4) auf der Aufbereitertrommel (3) entlang einer Umfangsschraubenlinie (28) den gleichen Wendelsinn aufweist, wie diese.

10. Aufbereitungsvorrichtung nach einem der vorhergehenden Ansprüche, **dadurch gekennzeichnet, daß** die Umlaufrichtung (25) der Aufbereitertrommel (3) an der Austrittsöffnung (10) mit der Förderrichtung der Extruderschnecke (8) übereinstimmt.

11. Aufbereitungsvorrichtung nach einem der vorhergehenden Ansprüche, **dadurch gekennzeichnet, daß** mehrere ortsfeste Gegenmesser (5) über die gesamte Länge des messertragenden Teiles (17) der Aufbereitertrommel (3) angebracht sind.

12. Aufbereitungsvorrichtung nach einem der vorhergehenden Ansprüche, **dadurch gekennzeichnet, daß** der messertragende Teil (17) der Aufbereitertrommel (3) über deren gesamte Länge reicht und die Austrittsöffnung (10) mit den in deren Endbereich (21) angeordneten Messern (4) überstreicht, wobei das wenigstens eine Gegenmesser (5) an der Zuführungsöffnung (11), vor dem im geschlossenen Teil des Förderrohres (6) befindlichen Endbereich (21) der Aufbereitertrommel (3) endet.

13. Aufbereitungsvorrichtung nach einem der vorhergehenden Ansprüche, **dadurch gekennzeichnet, daß** der austragorgantragende Teil (18) der Aufbereitertrommel (3) Austragorgane (19) trägt, die zumindest über eine Gangwindung einer Schraubenlinie über den Umfang der Aufbereitertrommel (3) reichen und wenigstens die Austrittsöffnung (10) des Förderrohrs (6) überstreichen.

14. Aufbereitungsvorrichtung nach einem der vorhergehenden Ansprüche, **dadurch gekennzeichnet, daß** der austragsorgantragenden Teil (18) eine Förderschnecke (9) trägt, die vorzugsweise eingängig ausgebildet ist.

15. Aufbereitungsvorrichtung nach einem der vorhergehenden Ansprüche, **dadurch gekennzeichnet, daß** am Ende des austragorgantragenden Teiles (18) der Aufbereitertrommel (3) mehrere, vorzugsweise vier, Schneckenflügel mit einer in Bezug auf die Austragsorgane (19) oder die Förderschnecke (9) geringen axialen Erstreckung und mit der entgegengesetzten Wendelung, angebracht sind.

16. Aufbereitungsvorrichtung nach einem der vorhergehenden Ansprüche, **dadurch gekennzeichnet, daß** am Ende des austragorgantragenden Teiles (18) der Aufbereitertrommel (3) ein oder mehrere mit dieser umlaufbare Messer (37), vorzugsweise zwei oder vier, in einer Radialreihe, in regelmäßigen Abständen über deren Umfang verteilt mit Messerhaltern (40) angebracht sind und daß mehrere, vorzugsweise zwei Radialreihen von Messern (37) in Axialrichtung in Abständen nebeneinander auf der Aufbereitertrommel (3) angeordnet sind, wobei die benachbarten Messer (37) benachbarter Radialreihen auf der Aufbereitertrommel (3) in Umfangsrichtung schrittweise zueinander versetzt sind und die umlaufenden Messer (37) mit ortsfesten Messern (37') kämmend ineinandergreifend schneiden.

17. Aufbereitungsvorrichtung nach Anspruch 16, **dadurch gekennzeichnet, daß** die ortsfesten Messer (37') mit Messerhaltern (40') auf einem in das Förderrohr einsetzbaren Aufnahmeteil (38) in einer Reihe angeordnet befestigt sind, der vorzugsweise durch eine seitliche Zugangsöffnung angebracht ist.

18. Aufbereitungsvorrichtung nach Anspruch 16, **dadurch gekennzeichnet, daß** die umlaufenden Messer (37) auf dem Mantel der Fördertrommel (3) mit der in Umlaufrichtung (25) weisenden Vorderkante in einer Axialebene (53) der Fördertrommel (3) liegen oder gegen diese vorauseilend angeordnet sind und mit den Außenkanten in einem zur Größe der Gutteile geringem Abstand an dem Außenumfang der Förderorgane der Extruderschnecke (8) vorbeilaufend angebracht sind.

19. Aufbereitungsvorrichtung nach Anspruch 16, dadurch **dadurch gekennzeichnet, daß** die umlaufbaren Messer (37) der Aufbereitertrommel (3) auf einer Schneidhülse (36) angebracht sind, die auf der Aufbereitertrommel (3) aufgeschoben ist.

20. Aufbereitungsvorrichtung nach Anspruch 19, **dadurch gekennzeichnet, daß** zwischen der Schneidhülse (36) und dem stirnseitig das Förderrohr (6) abschließenden Lagergehäuse (50) ein Druckring (39) eingesetzt ist, dessen Durchmesser größer ist als der Durchmesser der Aufbereitertrommel (3) und der vorzugsweise dicht bis an die Innenwand des Förderrohres (6) reicht und dort einen Spalt (51), von insbesonders etwa 0,2 bis 0,4 mm, bildet, wobei vorzugsweise an dessen stirnseitigem, zu der Stirnseite des Lagergehäuses (36) gerichteten Umfangsbereich, eine Labyrinthdichtung angebracht ist.

21. Aufbereitungsvorrichtung nach einem der vorhergehenden Ansprüche, **dadurch gekennzeichnet, daß** die Aufbereitertrommel (3) als austragsorgantragenden Teil mit einer Förderschnecke versehen ist, die in axialer Richtung zur, insbesonders mittig angeordneten, Austrittsöffnung (10) hin fördernd ausgebildet ist, wobei die Zuführungsöffnung (11) für die Aufbereitertrommel (3) in das als Förderrohr (6) ausgebildete Gehäuse (41) in axialer Richtung (20), über den die Förderschnecke tragenden Teil der Aufbereitertrommel (3) eingearbeitet ist, die im Bereich vor der nach unten gerichteten Austrittsöffnung (10) am Umfang des Förderrohres (6) endet, an dem Teil im Bereich oberhalb der Austrittsöffnung (10) wenigstens eine radiale Reihe von Messern und/oder Stopfwerkzeugen als austragsorgantragender Teil angebracht ist.

22. Aufbereitungsvorrichtung nach dem vorhergehenden Anspruch, **dadurch gekennzeichnet, daß** Aufgabevorrichtung (2) aus einem schachtförmigen Trocknungsbehälter (45) besteht, der mit einer oberen Beschickungseinrichtung (49) versehen ist, bei der eine Anspeisung (46) für Trocknungsgas, insbesonders Luft, zu einer Einblasdüse (44) geführt wird, die im Bereich über der Zuführungsöffnung (11) liegt, die mit der aufgenommenen Gutfeuchtigkeit im oberen Bereich des Trocknungsbehälters (45) über eine Ableitung zu dem Ausgang (48) geführt und von diesem abgeleitet oder einer Aufbereitungsanlage (47) zur Reinigung und Trocknung zugeleitet wird, von der aus das Trocknungsgas der Anspeisung (46) für die Einblasdüse (44) zugeführt wird.

23. Aufbereitungsvorrichtung nach dem vorhergehenden Anspruch, **dadurch gekennzeichnet, daß** die Förderschnecke, die beiderseits der Austrittsöffnung (10) als linksgängiger Förderschneckenteil (42) und als rechtsgängiger Förderschneckenteil (43) angeordnet ist, die beiderseits im Bereich vor der Austrittsöffnung (10) enden, wobei wenigstens eine radiale Reihe von Stopfwerkzeugen und/oder Messern im dem Bereich zwischen den Förderschneckenteilen (42,43) im Bereich über der Austrittsöffnung (10) angebracht ist.

24. Aufbereitungsvorrichtung nach einem der vorhergehenden Ansprüche, **dadurch gekennzeichnet, daß** die Zuführungsöffnung (11) über einen Umfangsbereich von 45 bis 180 Winkelgrade oben und seitlich über den Umfang des Förderrohres (3) herabreichend angebracht ist.

## Claims

1. Processing device for thermoplastic synthetic material, comprising a crushing device for crushing and transporting and a directly adjoining extrusion device for plasticising and in particular granulating, which is disposed horizontally in a housing and may be actuated to rotate, said housing being provided with an upwardly directed feed opening (11) and with a downwardly directed discharge opening (10) for the plastic material, wherein a feed shaft (14) for the plastic material is disposed upstream of the feed opening (11), surrounding this on all sides, and the discharge opening (10) and the filling opening of the screw tube (22) of an extruder screw (8) of an extrusion device directly adjoin one another with the inside walls (23, 24), **characterised in that** the crushing device comprises a single processing drum (3), which can be rotated in a transport tube (6) as a housing, with a blade-bearing part (17), on which blades (4) are distributed and are disposed to transport in axial direction towards the discharge opening (10) and may be meshed into at least one stationary counter-blade (5) on the transport tube (6), and adjoins with a part (18) of the processing drum (3) bearing discharge elements adjoining the blade-bearing part (17), wherein in the end region (21) of the part (18) bearing discharge elements in the transport tube (6) the downwardly directed discharge opening (10) is attached, wherein the operating paths of the discharge elements (19) of the processing drum (3) and the extruder screw (8) are arranged at a short distance from one another, running to almost touch one another with inside walls (23, 24) of the transport tube (6) and the screw tube (22) directly adjoining one another, and that a moveable delivery device (2) for the plastic material is disposed upstream of the processing drum (3), the working element of said delivery device may be regulated in the pressing force via the power increase of the drive elements or the extruder screw (8) and/or of the processing drum (3) and/or may be regulated via the rotational speed of the processing drum (3), and wherein the feed opening (11) is worked in on the feed shaft (14) of the delivery device (2) and extends in axial direction (20) over the blade-bearing part (17) of the processing drum (3).

2. Processing device according to Claim 1, **characterised in that** the delivery device (2) for the plastic material with the feed funnel (12) is disposed upstream of the feed opening (11), which is worked in over approximately one quarter of the circumference of the transport tube (6) reaching and extending from above as far as the centre thereof, into which opening the plastic material may be fed by means of a single moveable working element of the moveable delivery device (2).

3. Processing device according to Claim 2, **characterised in that** the feed shaft (14) on the feed opening (11) of the transport tube (6) is closed with a base plate (7), which is inclined downwards on an angle to the feed opening (11) and which extends as far as the opening edge (26) disposed downstream of the processing drum (3) in the direction of rotation (25) and extends over the entire length of the feed opening (11).

4. Processing device according to one of the preceding claims, **characterised in that** the delivery device (2) is formed by a moveable slide valve (30), which extends over the width of the base plate (7) and may be displaced on this essentially as far as the feed opening (11) of the processing drum (3) at a right angle to the axial direction (20) of the transport tube (6) by a hydraulic cylinder (27).

5. Processing device according to one of the preceding claims, **characterised in that** the slide valve (30), which is moveable via a hydraulic cylinder (27), in particular with an electro-hydraulically controlled pressure system, can exert a regulated pressing force onto the plastic material to be delivered, wherein the pressing force of the slide valve (30) may be regulated in dependence on the power increase, in particular the current increase, of the drive motor of the extruder screw (8) and/or the drive motor of the processing drum (3).

6. Processing device according to one of the preceding claims, **characterised in that** respectively at least one, in particular several, and preferably three to four blades (4) are fastened in a radial row on the circumference of the processing drum (3), wherein the blades (4) are preferably disposed along a circumferential helical line (28) and during operation run together with at least one stationary counter-blade (5), which extends, in particular continuously, over the entire length of the feed opening (11) in axial direction (20), wherein the cutting contours of the moving blades (4) closely mesh with the cutting contours of the counter blade (5) without touching, and when cutting commences, the cutting edges of the blades (4, 5) cutting over their entire cutting lengths are arranged to lie essentially in one plane.

7. Processing device according to one of the preceding claims, **characterised in that** the rotational speed of the processing drum (3) may be regulated in dependence on the temperature of the plastic material at the discharge opening (10) of the transport tube (6).

8. Processing device according to one of the preceding claims, **characterised in that** the processing drum (3) is attached to the screw tube aligned with its axial longitudinal direction (20) at a right angle to the longitudinal axis (31) of the extruder screw (8) and the screw tube (22).

9. Processing device according to one of the preceding claims, **characterised in that** several baffle plates (13) are attached to the inside wall (24) of the transport tube (6) at intervals from one another, which, when the blades (4) are arranged on the processing drum (3) along a circumferential helical line (28), spirals in the same direction as this.

10. Processing device according to one of the preceding claims, **characterised in that** the direction of rotation (25) of the processing drum (3) at the discharge opening (10) is the same as the transport direction of the extruder screw (8).

11. Processing device according to one of the preceding claims, **characterised in that** several stationary counter-blades (5) are attached over the entire length of the blade-bearing part (17) of the processing drum (3).

12. Processing device according to one of the preceding claims, **characterised in that** the blade-bearing part (17) of the processing drum (3) extends over its entire length and brushes over the discharge opening (10) with the blades (4) disposed in the end region (21) thereof, wherein the at least one counter-blade (5) terminates at the feed opening (11) in front of the end region (21) of the processing drum (3) located in the closed part of the transport tube (6).

13. Processing device according to one of the preceding claims, **characterised in that** the part (18) of the processing drum (3) bearing discharge elements bears discharge elements (19), which extend at least over a turn of a helical line over the circumference of the processing drum (3) and brush over at least the discharge opening (10) of the transport tube (6).

14. Processing device according to one of the preceding claims, **characterised in that** the part (18) bearing discharge elements bears a transport screw (9), which is preferably configured with a single turn.

15. Processing device according to one of the preceding claims, **characterised in that** several, preferably four, screw wings with a small axial extension with respect to the discharge elements (19) or the transport screw (9) and spiralling in the opposite direction are attached at the end of the part (18) of the processing drum (3) bearing discharge elements.

16. Processing device according to one of the preceding claims, **characterised in that** one or more, preferably two or four, blades (37), which are rotatable with the processing drum, in a radial row and distributed at regular intervals over its circumference, are attached with blade holders (40) at the end of the part (18) of the processing drum (3) bearing discharge elements, and that several, preferably two, radial rows of blades (37) are arranged in axial direction at intervals next to one another on the processing drum (3), wherein the adjacent blades (37) of adjacent radial rows on the processing drum (3) are displaced relative to one another in steps in the circumferential direction, and the rotating blades (37) cut intermeshing with stationary blades 37'.

17. Processing device according to Claim 16, **characterised in that** the stationary blades (37') are fastened with blade holders (40') arranged in a row on a receiving part (38), which may be inserted into the transport tube and is preferably attached through a lateral access opening.

18. Processing device according to Claim 16, **characterised in that** the rotating blades (37) lie on the shell of the processing drum (3) with the front edge pointing in the direction of rotation (25) in an axial plane (53) of the transport drum (3) or are arranged in advance of this, and are attached with the outer edges at a short distance relative to the particles of material to rotate past the outer circumference of the transport elements of the extruder screw (8).

19. Processing device according to Claim 16, **characterised in that** the rotatable blades (37) of the processing drum (3) are attached on a cutting sleeve (36), which is inserted on the processing drum (3).

20. Processing device according to Claim 19, **characterised in that** inserted between the cutting sleeve (36) and the bearing case (50) closing the transport tube (6) on the face side is a thrust collar (39), the diameter of which is larger than the diameter of the processing drum (3) and which preferably extends tightly as far as the inside wall of the transport tube (6) and there forms a gap (51) of in particular about 0.2 to 0.4 mm, wherein a labyrinth seal is attached preferably in the front area of its circumference directed towards the front side of the bearing case (50).

21. Processing device according to one of the preceding claims, **characterised in that** the processing drum (3) is provided with a transport screw as part bearing discharge elements, said transport screw being configured to transport in axial direction towards the discharge opening (10), which is in particular arranged centrally, wherein the feed opening (11) for the processing drum (3) is worked into the housing (41) configured as a transport tube (6) in axial direction via the part of the processing drum (3) bearing the transport screw, which terminates in the region in front of the downwardly directed discharge opening (10) on the circumference of the transport tube (6), at least one radial row of blades and/or tamping tools being attached as the part bearing discharge elements on the part in the region above the discharge opening (10).

22. Processing device according to one of the preceding claims, **characterised in that** the delivery device (2) comprises a shaft-shaped drying container (45), which is provided with an upper charging means (49), in which a feed means (46) for drying gas, in particular air, is directed to an injection nozzle (44) located in the region above the feed opening (11), which with the moisture absorbed from the material in the upper region of the drying container (45) is directed via a drain to the exit (48) and is directed from this or is directed to a processing plant (47) for purification and drying, from which the drying gas is fed to the feed means (46) for the injection nozzle (44).

23. Processing device according to one of the preceding claims, **characterised in that** the transport screw, which is disposed on both sides of the discharge opening (10) as a left-handed transport screw part (42) and as a right-handed transport screw part (43), which terminate on both sides in the area in front of the discharge opening (10), wherein at least one radial row of tamping tools and/or blades is attached in the region between the transport screw parts (42, 43) in the region above the discharge opening (10).

24. Processing device according to one of the preceding claims, **characterised in that** the feed opening (11) is attached over a circumferential region from 45° to 180° reaching above and laterally over the circumference of the transport tube (6).

## Revendications

1. Dispositif de préparation pour des matières thermoplastiques, comprenant un dispositif de fragmentation, assurant la fragmentation et le transport, et un dispositif d'extrusion assurant la plastification, et plus particulièrement la transformation en granulés, qui est placé immédiatement derrière celui-ci et est disposé horizontalement, avec possibilité d'entraînement en rotation, dans une enveloppe pourvue d'un orifice d'alimentation (11) dirigé vers le haut et d'un orifice de sortie (10) dirigé vers le bas pour la matière plastique, une trémie d'alimentation (14) pour la matière plastique étant disposée en amont de l'orifice d'alimentation (11) et entourant celui-ci de tous les côtés, l'orifice de sortie (10) et l'orifice de remplissage du tube à vis (22) d'une vis d'extrudeuse (8) d'un dispositif d'extrusion étant directement connectés l'un à l'autre par les parois intérieures (23, 24), **caractérisé en ce que** le dispositif de fragmentation est formé d'un unique cylindre de préparateur (3) tournant dans un tube transporteur (6) formant enveloppe, avec un tronçon (17) portant des couteaux, sur lequel des couteaux (4) sont répartis et disposés de manière à assurer le transport dans la direction axiale (20), vers l'orifice de sortie (10), lesquels couteaux coopèrent avec au moins un contre-couteau (5) stationnaire sur le tube transporteur (6), et avec un tronçon (18) du cylindre de préparateur (3) portant un organe de décharge placé à la suite du tronçon (17) portant les couteaux, l'orifice de sortie (10) dirigé vers le bas étant aménagé dans le tube transporteur (6), dans la région d'extrémité (21) du tronçon (18) portant l'organe de décharge, les trajectoires de fonctionnement des organes de décharge (19) du cylindre de préparateur (3) et de la vis d'extrudeuse (8) s'étendant à faible distance l'une de l'autre et se touchant presque, les parois intérieures (23, 24) du tube transporteur (6) et du tube de vis (22) se raccordant directement l'une à l'autre, et **en ce qu'**un dispositif de chargement (2) mobile pour la matière plastique est disposé avant le cylindre de préparateur (3), et comporte un organe de travail dont la force de poussée peut être réglée en fonction de la puissance absorbée par les éléments d'entraînement de la vis d'extrudeuse (8) et/ou du cylindre de préparateur (3) et/ou de la vitesse de rotation du cylindre de préparateur (3), l'orifice d'alimentation (11) étant aménagé sur la trémie d'alimentation (14) du dispositif de chargement (2) et s'étendant dans la direction axiale (20) jusqu'au dessus du tronçon (17) portant les couteaux du cylindre de préparateur (3).

2. Dispositif de préparation selon la revendication 1, **caractérisé en ce que** le dispositif de chargement (2) pour la matière plastique, avec la trémie d'alimentation, est disposé en amont de l'orifice d'alimentation (11), qui est aménagé sur environ un quart de la circonférence du tube transporteur (6), depuis le haut jusqu'au milieu de celui-ci, et dans lequel la matière plastique peut être introduite à l'aide d'un organe de travail unique du dispositif de chargement (2) mobile.

3. Dispositif de préparation selon la revendication 2, **caractérisé en ce que** la trémie d'alimentation (14), côté orifice d'alimentation (11) du tube transporteur (6), se termine par une plaque de fond (7) inclinée vers le bas en direction de l'orifice d'alimentation (11), qui s'étend jusqu'au bord d'ouverture (26) arrière, vu dans la direction de rotation (25) du cylindre de préparateur (3), et sur la totalité de la longueur de l'orifice d'alimentation (11).

4. Dispositif de préparation selon une des revendications précédentes, **caractérisé en ce que** le dispositif de chargement (2) est formé d'un poussoir (30) mobile, qui s'étend sur la largeur de la plaque de fond (7) et peut être déplacé sur celle-ci, essentiellement jusqu'à l'orifice d'alimentation (11) du cylindre de préparateur (3), perpendiculairement à la direction axiale (20) du tube transporteur (6), à l'aide d'un vérin hydraulique (27).

5. Dispositif de préparation selon une des revendications précédentes; **caractérisé en ce que** le poussoir (30), qui peut être déplacé par l'intermédiaire d'un vérin hydraulique (27), en particulier avec une installation de pression à commande électro-hydraulique, peut exercer une pression réglable sur la matière plastique à charger, la pression du poussoir (30) pouvant être réglée en fonction de la puissance absorbée, notamment de l'intensité utilisée par le moteur d'entraînement de la vis d'extrudeuse (8) et/ou par le moteur d'entraînement du cylindre de préparateur (3).

6. Dispositif de préparation selon une des revendications précédentes, **caractérisé en ce qu'**au moins un, plus particulièrement plusieurs et de préférence trois à quatre couteaux (4) est(sont) fixé(s) suivant une rangée de rayons sur le pourtour du cylindre de préparateur (3), les couteaux (4) étant disposés de préférence le long d'une hélice périphérique (28) et coopérant en fonctionnement avec un contre-couteau (5) stationnaire, en particulier continu, qui s'étend dans la direction axiale (20) sur la totalité de la longueur de l'orifice d'alimentation (11), les profils de lame des couteaux (4) mobiles engrenant avec un faible jour, mais sans contact, avec les profils de lame du contre-couteau (5) et, au début de la coupe, les arêtes tranchantes des couteaux (4, 5) coupants sur la totalité de leur longueur étant situées essentiellement dans un plan.

7. Dispositif de préparation selon une des revendications précédentes, **caractérisé en ce que** la vitesse de rotation du cylindre de préparateur (3) peut être réglée en fonction de la température de la matière plastique au niveau de l'orifice de sortie (10) du tube transporteur (6).

8. Dispositif de préparation selon une des revendications précédentes, **caractérisé en ce que** le cylindre de préparateur (3) est monté sur le tube de vis (22) de telle sorte que sa direction longitudinale (20) axiale forme un angle droit avec l'axe longitudinal (31) de la vis d'extrudeuse (8) et dudit tube de vis (22).

9. Dispositif de préparation selon une des revendications précédentes, **caractérisé en ce que** plusieurs tôles déflectrices (13) sont montées espacées les unes des autres sur la paroi intérieure (24) du tube transporteur (6), lesquelles tôles, lorsque les couteaux (4) sur le cylindre de préparateur (3) sont disposés le long d'une hélice (28), présentent le même sens d'enroulement que celle-ci.

10. Dispositif de préparation selon une des revendications précédentes, **caractérisé en ce que** le sens de rotation (25) du cylindre de préparateur (3), au niveau de l'orifice de sortie (10), correspond à la direction de transport de la vis d'extrudeuse (8).

11. Dispositif de préparation selon une des revendications précédentes, **caractérisé en ce que** plusieurs contre-couteaux (5) stationnaires sont montés sur la totalité de la totalité de la longueur du tronçon (17) portant des couteaux du cylindre de préparateur (3).

12. Dispositif de préparation selon une des revendications précédentes, **caractérisé en ce que** le tronçon (17) portant des couteaux du cylindre de préparateur (3) s'étend sur la totalité de la longueur du cylindre et balaie l'orifice de sortie (10) avec les couteaux (4) qui sont disposés dans sa portion d'extrémité (21), le contre-couteau (5) au nombre d'au moins un, au niveau de l'orifice d'alimentation (11), se terminant avant la portion d'extrémité (21) du cylindre de préparateur (3) située dans la partie fermée du tube transporteur (6).

13. Dispositif de préparation selon une des revendications précédentes, **caractérisé en ce que** le tronçon (18) portant des organes de décharge du cylindre de préparateur (3) est pourvu d'organes de décharge (19), qui s'étendent au moins sur une spire d'une hélice, sur la périphérie du cylindre de préparateur (3) et balaient au moins l'orifice de sortie (10) du tube transporteur (6).

14. Dispositif de préparation selon une des revendications précédentes, **caractérisé en ce que** le tronçon (18) portant des organes de décharge porte une vis transporteuse (9), de préférence à pas simple.

15. Dispositif de préparation selon une des revendications précédentes, **caractérisé en ce qu'**à l'extrémité du tronçon (18) portant des organes de décharge du cylindre de préparateur (3) sont montées plusieurs, de préférence quatre ailettes de faible étendue axiale par rapport aux organes de décharge (19) ou à la vis transporteuse (9) et avec un pas inversé.

16. Dispositif de préparation selon une des revendications précédentes, **caractérisé en ce qu'**à l'extrémité du tronçon (18) portant des organes de décharge du cylindre de préparateur (3), un ou plusieurs, de préférence deux ou quatre couteaux (37) tournant avec celui-ci, avec des porte-couteaux (40), est(sont) monté(s) en une rangée radiale, avec un espacement régulier sur le pourtour du cylindre, et **en ce que** plusieurs, de préférence deux rangées radiales de couteaux (37) sont disposées espacées l'une à côté de l'autre dans la direction axiale sur le cylindre de préparateur (3), les couteaux (37) voisins de deux rangées radiales voisines sur le cylindre de préparateur (3) étant mutuellement décalées dans la direction périphérique et les couteaux tournants (37) coopérant avec les couteaux stationnaires (37') pour assurer la coupe.

17. Dispositif de préparation selon la revendication 16, **caractérisé en ce que** les couteaux stationnaires (37') avec les porte-couteaux (40') sont fixés dans une configuration en rangées à un élément support (38) monté dans le tube transporteur, qui de préférence est mis en place à travers une ouverture d'accès latérale.

18. Dispositif de préparation selon la revendication 16, **caractérisé en ce que** les couteaux tournants (37) sont disposés sur la surface extérieure du cylindre de préparateur (3), avec leur bord avant orienté dans la direction de rotation (25) situé dans un plan axial (53) du cylindre de préparateur (3) ou en avant de celui-ci, et sont montés de manière à ce que leurs arêtes extérieures passent à une faible distance par rapport à la taille des fragments de produit de la surface extérieure des organes de transport de la vis d'extrudeuse (8).

19. Dispositif de préparation selon la revendication 16, **caractérisé en ce que** les couteaux tournants (37) du cylindre de préparateur (3) sont montés sur un manchon (36) qui est enfilé sur le cylindre de préparateur (3).

20. Dispositif de préparation selon la revendication 19, **caractérisé en ce qu'**entre le manchon (36) et le corps de palier (50) qui ferme le tube transporteur (6) côté frontal est montée une bague de pression (39) dont le diamètre est supérieur au diamètre du cylindre de préparateur (3) et qui de préférence s'étend de manière étanche jusqu'à la paroi intérieure du tube transporteur (6) et forme à cet endroit une fente (51) d'environ 0,2 à 0,4 mm, de préférence un joint à labyrinthe étant monté sur sa partie périphérique côté frontal, tournée vers la face frontale du corps de palier (36).

21. Dispositif de préparation selon une des revendications précédentes, **caractérisé en ce que** le cylindre de préparateur (3), en tant qu'élément portant des organes de décharge, est muni d'une vis transporteuse qui est conformée de manière à assurer le transport dans la direction axiale vers un orifice de sortie (10), en particulier médian, l'orifice de sortie pour le cylindre de préparateur (3) étant usiné dans l'enveloppe (41) conformée en tube transporteur (6), dans la direction axiale, au-dessus du tronçon du cylindre de préparateur (3) portant la vis transporteuse, qui se termine dans la zone avant l'orifice de sortie (10) dirigé vers le bas prévu dans la paroi du tube transporteur (6), au moins une rangée radiale de couteaux et/ou d'outils de poussée étant montée sur l'élément dans la région au-dessus de l'orifice de sortie (10) en tant tronçon portant des organes de décharge.

22. Dispositif de préparation selon une des revendications précédentes, **caractérisé en ce que** le dispositif de chargement (2) est formé d'un récipient de séchage (45) en forme de trémie avec un moyen de chargement (49), dans lequel une arrivée (46) pour un gaz de séchage, en particulier de l'air, est reliée à une buse (44) située dans la région au-dessus de l'orifice d'alimentation (11), lequel gaz chargé d'humidité du produit, est amené vers la sortie (48) dans la région supérieure du récipient de séchage (45) par une conduite d'évacuation et de là est évacué ou envoyé à des fins de purification et de séchage dans une installation de traitement (47), depuis laquelle le gaz de séchage est envoyé à l'arrivée (46) menant à la buse (44).

23. Dispositif de préparation selon une des revendications précédentes, **caractérisé en ce que** la vis transporteuse est disposée de part et d'autre de l'orifice de sortie (10), sous forme de tronçon de vis transporteuse (42) à pas à gauche et de tronçon de vis transporteuse (43) à pas à droite qui se terminent dans la zone avant l'orifice de sortie (10), au moins une rangée d'outils de poussée et/ou de couteaux étant montée dans la zone entre les tronçons de vis transporteuse (42, 43), dans la région au-dessus de l'orifice de sortie (10).

24. Dispositif de préparation selon une des revendications précédentes, **caractérisé en ce que** l'orifice d'alimentation (11) est aménagé dans une portion de circonférence de 45 à 180 degrés qui s'étend sur le dessus et latéralement vers le bas sur le pourtour du tube transporteur (3).
